# EUROPEAN PATENT SPECIFICATION

(11) **EP 3 551 502 B1**
(45) Date of publication and mention of the grant of the patent: **21.07.2021**
(21) Application number: 17804555.5
(22) Date of filing: 28.11.2017
(51) Int. Cl.: B60R 13/02, B32B 27/12, B05D 1/08, C23C 4/12

(54) **SURFACE COATING FOR AN EXTERIOR TRIM PART**
OBERFLÄCHENBESCHICHTUNG FÜR EIN AUSSENVERKLEIDUNGSTEIL
REVÊTEMENT DE SURFACE POUR UNE PIÈCE D'HABILLAGE EXTÉRIEUR

(30) Priority: 08.12.2016 EP 16203049; 24.01.2017 EP 17152801
(43) Date of publication of application: 16.10.2019
(73) Proprietor: Autoneum Management AG, 8406 Winterthur (CH)
(72) Inventor: HABERL, Johannes, 8005 Zürich (CH); JUNGHANS, Wilfried, 8500 Frauenfeld (CH)
(86) International application number: PCT/EP2017/080596
(87) International publication number: WO 2018/104101

(56) References cited:
- EP-A2- 1 129 787
- WO-A1-00/48821
- WO-A1-2016/166217
- GB-A- 2 300 588

## Description

### Technical Field

The invention relates to an exterior trim part or panel for motor vehicles, more specifically, to a wheel housing lining or an under body panel comprising a carrier of fibrous material.

### Background Art

Patent document GB 2 300 588 A discloses a polymeric article, for example a vehicle component, comprising a thermoplastic substrate provided with a thermoplastic coating layer.

Exterior trim parts or panels are used abundantly to cover car structures underneath the car and in the wheel well. There are two groups of such trim parts, the more flat moulded panels like under engine shields or main under body panels and the arched shaped trim parts used in the wheel housing.

It is known to produce such parts in a stiffened fibrous material as the main carrier or shell layer. This is practical, as it reduces weight and attenuates noise due to the open air permeable structure of the fibrous material. However it has the huge disadvantage that it is prone to icing and soiling problems. This might cause an increase in weight of the part during use and might even cause damage to the part.

For example wheel arch liners or wheel house lining or fender liners or outer wheel house liners are needed to cover the inner side of the wheel housing and protect it against water spray and stone chipping. In general these parts are made of injection moulded plastic. For additional acoustic attenuation of tire and road noise absorbing materials are used either in combination with an injection moulded carrier or as a stand-alone solution forming a stiff enough part. These parts may be made for example of a fibrous carrier layer.

However, fibre-based wheel house liners may have problems in antifouling performance and anti-icing performance because muddy water, snow, or ice thrown up by the tire easily adheres to the liner while the vehicle is running. Note that the icing performance defined by the car makers refers to performance preventing ice from adhering. Particularly, when the vehicle runs on a snow-covered road in a cold region, freezing of the liner itself can cause a large amount of ice and snow to adhere to the liner. The ice may hamper the proper driving of the car. In addition it may also increase the weight of the part and therefore of the car, causing an increase in fuel consumption.

Solutions to prevent fouling and or ice forming are for instance a closed or perforated film laminated on the surface of the interior part facing the tire tread or the road directly. Also additional impregnated fibrous layers or resin extruded layers on this surface are proposed solutions. The disadvantage of these solutions is that the absorbing layer underneath is closed and thereby loosing most of its noise absorbing function as noise can no longer penetrated the absorber. In addition the material is mostly applied before the production of the part or during production. Films or extruded layers are thereby stretched and might tear during the moulding of the actual part.

It is therefore the object of the current invention to provide a fibrous exterior trim part that maintains its noise absorbing properties and has improved anti-soiling and anti-icing properties.

### Summary of invention

This object is achieved by an exterior trim part with the features of claim 1 and by a method of producing such with the features of claim 15 and the use of such a trim part according to claim 14.

In particular, an exterior trim part comprising at least a fibrous layer forming a carrier having at least one surface consisting of a splat polymer coating deposited at least along a portion of the surface forming a layer.

Surprisingly, the splat polymer coating increase the resistance of the fibrous carrier against icing, soiling and stone chipping.

Preferably the layer can be deposited such that it is air permeable increasing the noise attenuation of the part, however it can also be deposited in a thicker layer to further improve stiffness or stone impact.

The depositing of the polymeric material is preferably done using polymer thermal spraying. Preferably a thermal spray process, for instance a combustion or plasma based spray process, is used whereby a fluid flows to accelerate and melt and or soften the polymer powder particles in-flight and propels them towards the inner side of the outer wheel arch liner surface to be coated. The spraying process is preferably done by a flame spray or a flameless spray technology, for instance as known from US 8857733 .

The depositing of the polymeric material may be done with for instance a thermal spray apparatus utilizing resistive element heating as a heat source for main spray gas containing the polymer material in the form of small droplets. Upon impact at the surface of the targeted material, the heated particles (droplets) deform (splat), consolidate and cool (solidify) to form a coating or a deposit of material. As the splats are formed irregular and partly fuse with neighbouring splats or droplets, the deposited polymeric material forms a random layer consisting of areas - splats- of solidified material and areas without polymeric material. Hence the polymer splat layer formed may be air pervious.

A thermal sprayed coating has a unique microstructure. During the deposition process, each particle enters a gas stream, melts, and cools to the solid form independent of the other particles. When particles impact the surface being coated, they impact ("splat") as flattened circular platelets eventually forming legs and solidify at high cooling rates. The coating is built up on the substrate by having particles subsequently hitting on the surface. The built up can be further enhanced by traversing the spray apparatus repeatedly over the substrate, building up layer by layer until the desired thickness of coating has been achieved. Because the particles solidify partially as splats, the resultant microstructure might have an uneven surface, with the grains approximating circular platelets eventually with legs randomly stacked above the plane of the substrate and partly filling gaps in the surface of the substrate.

Surprisingly also a mechanical bonding between the splats and the fibrous carrier layer may occur, increasing the bonding strength between the coating and the carrier layer. Hence the coating layer is integrally bound to the carrier layer and cannot be separated again easily. This further enhances the durability of the part against stone chipping and other impacts.

Preferably the spray apparatus is controlled using a robotic arm, ensuring an even repeatable pattern on the surface to be coated. In particular for more complex shapes, like the wheel arch liner, it is still possible to obtain an even layer even on the inner side of the arch.

Optionally only one or certain areas of the part's surface most affected by icing or soiling might be coated while other areas are left uncoated. Also the amount of layers and therefore the air flow resistance can be varied depending on the need to obtain a high acoustic performance or to prevent the icing and soiling from happening. In addition areas can be made with increase thickness to improving stiffness locally.

It is also possible to coat at least partly both sides of the part, preferably with different air flow resistance layers according to the invention. Thereby further enhancing the acoustic properties of the parts as well as the icing and anti-soiling properties. For instance the lower portion of a wheel arch liner can be coated on both sides with a thicker layer to prevent stone chipping on both sides of the liner. This might occur specifically in the end area of the panel in front of the wheel in driving direction of the car, where stones might flip over the edge and chipping the backside of the panel facing away the car body.

Optionally also local reinforcements can be obtained using the coating according to the invention. As the bonding to the surface is surprisingly high, areas for instance around a mounting point might be coated with a thicker impervious coat to stiffen and enforce the area. Increasing the pulling force needed to break or crack the mounting area and therefore enhancing the durability of the part.

Preferably the splat polymer coating has shore hardness at room temperature below shore 50D, preferably hardness below shore 70A.

The polymer splat coating layer has preferably an area weight of between 100 and 300g.m⁻², preferably between 100 and 250g.m⁻². The thickness of the splat coating layer is dependent on the actual requirements of the part as well as of the area sprayed.

Depending on the area weight of the final layer sprayed, the droplets size and process parameters, the layer produced as such can be closed having an air flow resistance up to 8000 N.s.m⁻³ or it can be fairly open with an air flow resistance close to 100 N.s.m⁻³. Measured according to current ISO9053 using the direct airflow method (Method A).

Preferably the air flow resistance is between 800 and 8000 N.s.m⁻³, more preferred between 1000 and 3000 N.s.m⁻³ for at least the fibrous carrier and one coating layer. Preferable the overall airflow resistance of the carrier layer including deposited layers is between 1500 and 4000 N.s.m⁻³.

Locally for instance around mounting points or areas highly impacted by stone chipping, icing or soiling, an impermeable polymer splat coating layer might be deposited.

The particle size is chosen to fulfil the requirements of the process and or the part performance to be achieved. Preferably polymer particles with a size distribution are used, with around 95% of the particles being smaller than 500µm, preferably with around 95% of the particles being smaller than 400µm, more preferred with around 95% of the particles being smaller than 200µm.

The particles are preferably a thermoplastic polymer, preferably at least one of the group of polyolefins, such as low density polyethylene (LDPE) or polypropylene (PP), ethylene-vinyl acetate (EVA), polyester (PES), copolymers of polyester (CoPes), thermoplastic elastomers (TPE) such as thermoplastic polyurethane (TPU) or thermoplastic polyester elastomer (TPE-E) or thermoplastic polyolefin (TPO). Mixtures of thermoplastic polymers to enhance different features can be used as well, for instance a combination of LDPE, EVA and TPO. The polymers are preferably mixed as powders.

Preferably other additives like flame retarder, polyphosphates, colour agents, or particular pigments, like carbon black, Titanium dioxide, calcium carbonate, Calcium sulphate, Silicon dioxide, aluminium oxide or organic colouring molecules, stabilizers, anti-oxidants might be used mixed in the polymer powder, or the polymer forming the powder.

The thermoplastic polymer and the process parameters are chosen such that the polymer forms an aerosol of liquid droplets (and eventually a small amount of solid particles) in a fluid stream that can be deposited on the carrier surface. Preferably the carrier surface is heated or kept warm to prevent the liquid droplets from cooling before fusing with the fibrous surface and or other droplets. The fused polymer droplets are sometimes called splats.

Preferably, the thickness of the total polymer layer, or layers, and the distribution of the droplets are such that the coating stays pervious, enabling a noise attenuation of the underlying fibrous carrier layer.

Preferably the thickness of the layer is between approximately 100µm and 2mm. The higher thickness is normally used in areas of high impact and more likely an impervious layer. Thicker areas used in high impacted areas of the part are preferably made with a more elastic thermoplastic resin, to further improve the durability of the part.

In general, an elastic coating is used with a shore hardness at room temperature preferably below shore 50D, more preferably a polymer mixture is used with a hardness below shore 70A. The term shore hardness is used as defined in the ASTM D2240 (equivalent to DIN EN ISO868, both as valid on the time of filing). In areas where further stiffening is required polymer mixtures with shore hardness above shore 50D may be used.

The viscosity of the polymers chosen is particularly tuned to meet the requirements of both, the splat process and the final requirements of the part. Preferably each polymer has a melt flow index at 190°C above 20, preferably above 50.

The melting or softening temperature of the polymer mixture is chosen according to the requirements of the splat process just as well as the product requirements. For example a splat layer according to the invention can be applied at least on the inner side of an outer wheel arch liner with a mixture of polymers being EVA, LDPE and TPO. Each Polymer having a softening and melting temperature in the region between 90° and 170°C. The polymer mixture has preferably a MFI at 190°C above 20, more preferably above 50.

The fibrous carrier comprises of at least fibers and a binder, whereby the fibers are defined as being staple fibers or endless filaments.

Preferably the fibers are thermoplastic, preferably at least one of a polymer or copolymer of polyester, preferably polyethylene terephthalate or polybutylene terephthalate, or of polyamide, preferably polyamide 6 or polyamide 66 or of a polyolefin, preferably polypropylene or polyethylene.

The fibers might also comprise mineral fibers, like glass fibers, basalt fibers or carbon fibers. Also a mixture of the thermoplastic fibers as disclosed together with mineral fibers as disclosed is possible.

All cross sections of fibers are possible, however solid or hollow round cross sections are preferred.

Preferably the binder is either thermoset, preferably epoxy or phenolic, or thermoplastic, preferably a copolymer of polyester, preferably co-polyethylene terephthalate or co-polybutylene terephthalate, or a polyamide, preferably polyamide 6 or polyamide 66, or a polyolefin, preferably polypropylene or polyethylene.

Preferably the fibers and binder are combined in bi-component fibers, preferably in the form of endless filaments with a core formed of polyethylene terephthalate and the sheath formed of a copolymer of polyethylene terephthalate. Also a mixture of bi-component fibers and mono component fibers might be used.

Fibers as used in this application can be staple fibers or endless filaments, like for instance obtained with melt spun processes.

The fibrous carrier layer can be obtained by state of the art processes, like carding, cross lapping technologies, air laid technologies or combination of such processes with other known processes. The moulding of the carrier layer can be done with state of the art moulding processes, like pre-warming and cold moulding or direct hot moulding. The part is preferably cut into shape before the coating takes place, to enable a recycling of uncoated cut off material. In particularly when the coating material and the material of the fibrous carrier are not the same or similar.

The carrier layer has preferably an area weight of between 400 and 2000 g.m⁻², depending on the application it can be between 500 and 700g.m⁻² or between 700 and 1000g.m⁻². For example a panel can be made with an area weight of the carrier layer of between 400 and 1600g.m⁻² with a coating with an area weight between 100 and 250g.m⁻²

The coating can also be used to make a textile part impervious to engine fluids, as some of the exterior trim parts used might be coming in contact with engine fluids like oil, gasoline or diesel, during a spill. As they are porous fibrous part they might soak up the fluid and become a flammability hazard. Therefore it might be of interest to deposit a splat polymer coating at least along a portion of the surface facing a possible source of such fluids forming a preferably fluid impervious layer.

It is possible to coat both sides of the part, preferably with two different polymer mixtures, thereby tuning the resistance against water-based soiling on one side and fuel and or oil soaking on the other side. To do so, one polymer coating would be hygroscopic, the other one lipophobic.

In one embodiment according to the invention, the polymer coating is applied onto the concave side of the outer wheel arch liner in the area which is facing the tire tread and possibly the area is slightly extended beyond the impact area of projected particles from the wheel. The utilized polymer mixture consist LDPE with a particle size distribution with 95% of the particles below 200µm. The LDPE has a melting temperature between 90°C and 145°C. The MFI at 190°C is above 20 preferably above 50 to ensure the splat process. The AFR of the final part is tuned to be between 1500 and 4000 N.s.m⁻³. In selected areas the surface can be impervious. The fibers of the carrier layer are thermoplastic polyethylene terephthalate and bi-component fibers with a core formed of polyethylene terephthalate and the sheath formed of a copolymer of polyethylene and whereby the sheath forms the binder. The carrier layer was moulded to form the outer wheel arch liner before coating the surface with the polymer splat coating layer according to the invention. Surprisingly, the stone chipping of a coated material with a total (carrier + coating) combined area weight of 850 g.m⁻² is comparable to the stone chipping results of the same weight of carrier material on its own, however the soiling and anti-icing results were better.

In another embodiment according to the invention, the polymer coating is applied onto the concave side of the outer wheel arch liner in the area which is facing the tire tread, the areas slightly extended beyond the impact area of projected particles from the wheel. The utilized polymer mixture consists of 40 to 50% by weight of EVA, 40 to 50% by weight of LDPE and 0 to 10% by weight of TPO. Each polymer with a softening and melting temperature in the region between 90°C and 145°C. The polymers are mixed as powders. The MFI at 190°C of all polymers selected is above 20 preferably above 50 to ensure the splat process. The AFR is tuned between 1500 and 4000 N.s.m⁻³.

Trim parts made according to the invention are preferably used in the exterior of a vehicle or in the engine bay area, for instance as a underbody panel, an outer wheel arch liner, a under engine shield, an aerodynamic panel, a cover or panel for the engine or gearing, rocker panel or defuser panel.

### Brief description of drawings

Figure 1 Schematic drawing of an outer wheel arch liner according to the state of the art.
Figure 2 Schematic drawing of the polymer spray technology
Figure 3 Schematic drawing of the spray direction on the outer wheel arch liner.
Figure 4 shows a vehicle from underneath.
Figure 5 shows an example of a set of different exterior panels.
Figure 6 shows a microscopic view of a surface thermal spray coating according to the invention.

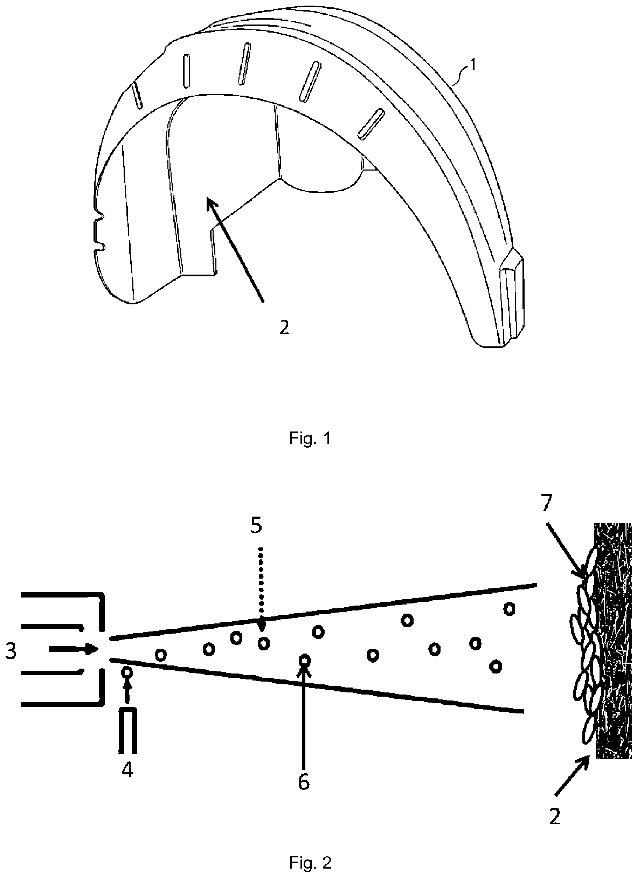

Figure 1 shows an arched shaped wheel arch liner that can be placed in the wheel well of a vehicle opposite the wheel tread (not shown). Depending on the front or the rear wheel and left or right side of the car and on the design of the car, the wheel arch liner might be slightly different formed. A first surface 1 is facing towards the car body, while a second surface 2 is facing towards the wheel tread. Both surfaces might be treated with a coating according to the invention. However surface 2 is more prone to icing, soiling and or stone chipping and is therefore preferably at least partially coated according to the invention.

Figure 2 shows schematically an example of a polymer thermal spray process to deposit the splat polymer coating on the fibrous substrate.

In a first step of the process a thermal fluid spray gun is producing a stream of hot air or fluid (3), in which a feedstock (4) of polymer particles is fed. Both functions are preferably combined in one spray gun head. Due to the interaction of the temperature on the polymer particles they are accelerated and molten to form liquid or partially-liquid droplets (5, 6). These droplets are colliding with the substrate face layer and form splats(7) -flattened solidified droplets, eventually legging- that partly fuse and or interlock with neighbouring splats as well as with the fibers on the surface of the carrier layer (2), forming an irregular coating on the surface of the carrier layer. Surprisingly the splats form fusion bonds as well as mechanical interlocking bond with the carrier layer, causing a preferred strong bond between the carrier layer and the coat that cannot be easily broken again.

The shown process is just an example; other processes known in the art to produce a similar coating according to the invention may be used as well.

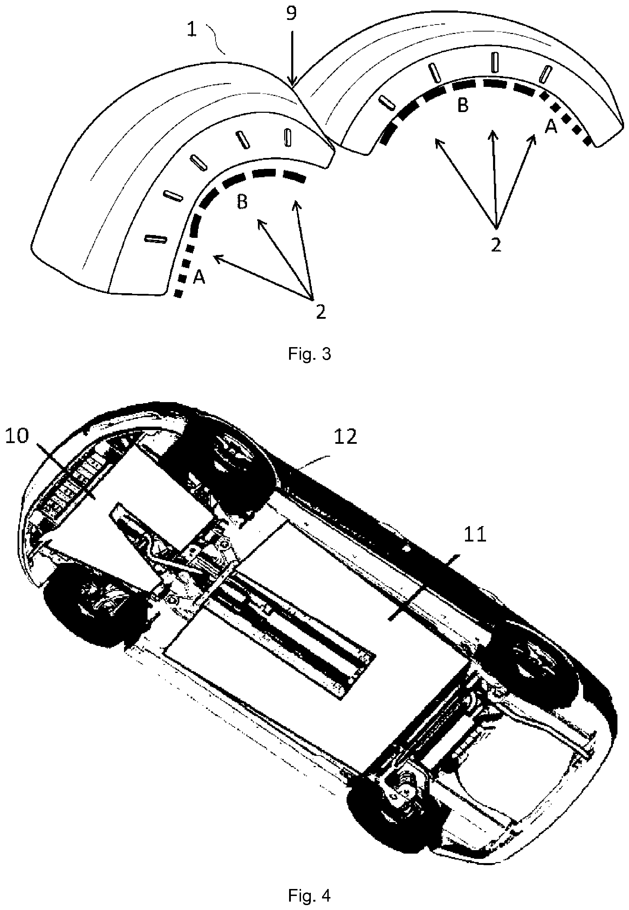

Figure 3 shows a moulded outer wheel arch liner (1) ready to get a coat. The arrows (2) indicate a possible direction of the sprayed coating at the inner side of the arched wheel arch liner. In this case the wheel arch liner contains a fold line (9) to make the inner side of the wheel arch liner more accessible for the spray coating process.

It is not necessary that the complete surface of the inner side of the outer wheel arch liner is coated, for instance the outer areas that are facing the side of the tire when placed in the car might not need a coating, while the areas close to the road (indicated with A) might need a thicker coat, as icing might be building up in these areas quicker and more pronounced as in the middle areas (indicated with B) where a lower air flow resistance might be more beneficial for the overall acoustic attenuation. Preferably also the outer surface in zone A, in particularly the area closer to the front of the car, might be coated with a thicker coat to prevent stone chipping damage from stones flipping over the rim hitting the back surface (indicated with 2 in figure 1) in this lower area.

In areas more prone to stone chipping the coating layer might be thicker, for instance in zone A.

Preferably the spray coating process is done with help of a robotic arm, ensuring an even distance to the surface layer and an even layering of the droplets on the surface.

Preferably the surface is coated directly after the moulding without a substantially cooling of the part. In this way the heat of the moulding still available in the part can be used to further optimise the coating process. If the difference between the temperature of the surface and the temperature of the droplets would be too large, the droplets would be solidified upon the impact and would not form a good fusion and or bond with neighbouring splats or with the fibrous carrier layer. The coating would become grainy and might not bind to the surface. Alternatively the spray coating can be done in a well-tempered room.

Figure 4 shows the underside of a vehicle with examples of under body panels 10, 11 mounted to the chassis 12 of the vehicle, for instance to the cross beams of the steel carrying body of a vehicle. The panel 10 in front, also known as under engine panel is the most exposed to the forces during driving or for instance driving through fresh snow.

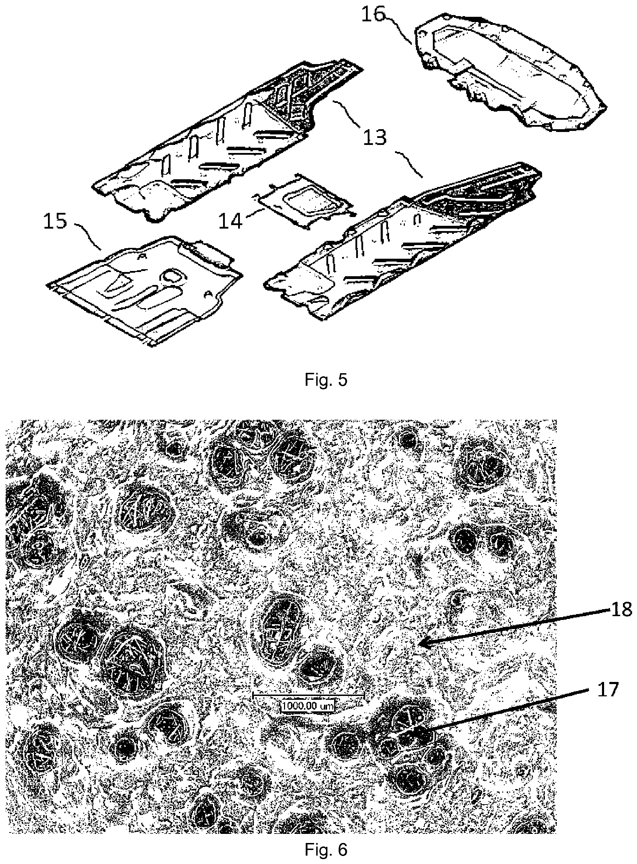

Figure 5 shows additional under body panels and a layout for such panelling, with the front or under engine panel 16, the main under body panel 13, in this case divided in 2 parts, a centre panel 14 and the back panel 15, situated under the boot or trunk of the vehicle.

All these panels for the underside of the vehicle might be designed according to the invention, and may benefit from a partial or full thermal spray coating.

Figure 6 shows a microscopic view of a surface thermal spray coating according to the invention with a splat polymer coating deposited on the surface, forming an air permeable layer. The surface coating shows areas where an irregular pattern of the splats are formed and solidified (18), while in other areas (17) the fibrous carrier layer can still be seen in uncoated spots. Considering the size of these uncoated spots this will cause the air flow resistance necessary to obtain a good sound attenuation.

## Claims

1. An exterior trim part comprising at least a porous fibrous layer forming the carrier, **characterised in that** at least one surface consists of a splat polymer coating deposited at least along a portion of the surface (2) of the carrier forming a splat polymer coating layer (7).

2. An exterior trim part according to claim 1, whereby the splat polymer coating (7) has shore hardness at room temperature below shore 50D, preferably a hardness below shore 70A.

3. An exterior trim part according to claim 1 or 2, whereby the splat polymer coating (7) is a thermoplastic polymer, or a mixture of at least two thermoplastic polymers, preferably at least one polymer of the group of polyolefins, such as low-density polyethylene (LDPE) or polypropylene (PP), ethylene-vinyl acetate (EVA), polyester (PES) or copolymer of polyester (CoPes), thermoplastic elastomers (TPE), such as thermoplastic polyurethane (TPU) or thermoplastic polyester elastomer (TPE-E) or thermoplastic polyolefin (TPO).

4. An exterior trim part according to claim 3 whereby the polymer further comprises at least one additive of the groups of flame retarders, stabilizers, anti-oxidants, colour agents or pigments, like carbon black, Titanium dioxide, calcium carbonate, Calcium sulphate, Silicon dioxide, aluminium oxide or organic colouring molecules or polyphosphates.

5. An exterior trim part according to one of the preceding claims whereby each polymer of the splat coating (7) has a melt flow index at 190°C above 20, preferably above 50.

6. An exterior trim part according to one of the preceding claims, whereby at least one splat polymer coating layers (18) is air permeable, preferably the air flow resistance over the carrier layer including the splat coating layer or layers is between 100 and 8000 N.s.m⁻³, preferably between 1500 and 4000 N.s.m⁻³.

7. An exterior trim part according to one of the preceding claims, whereby the fibrous layer comprises fibers and/or endless filaments and a thermoplastic binder.

8. An exterior trim part according to claim 7, whereby the fibers or endless filaments are at least one of mineral fibers, preferably glass fibers, thermoplastic fibers, preferably polyester, like polyethylene terephthalate (PET) or polybutylene terephthalate (PBT), or natural fibers, like cotton.

9. An exterior trim part according to claim 7 or 8, whereby the binder is at least one of a copolymer of polyester, polyolefin, like polypropylene or polyethylene, or polyamide.

10. An exterior trim part according to one of the claim 1 to 6, whereby the fibrous layer consists of polyester bi-component endless filaments with a core-sheath structure, and whereby the sheath material is a copolymer of polyester forming the binder for the fibrous layer.

11. An exterior trim part according to one of the preceding claims, further comprising at least one additional layer on the surface of the carrier opposite the coated surface (2), preferably one of a scrim, film or additional noise absorbing layer like a foam or felt.

12. An exterior trim part according to one of the preceding claims further comprising a scrim layer, like a nonwoven, woven or knit layer, between the fibrous carrier layer and the deposited splat coating layer.

13. An exterior trim part according to one of the preceding claims whereby the splat coating layer has an area weight of between 100 and 300 g.m⁻².

14. Use of the exterior trim part with the splat coating according to one of the preceding claims for a vehicle as an underbody panel (10,11,13,14,15,16), an outer wheel arch liner (1), an under engine shield (16), an aerodynamic panel, a cover or panel for the engine or gearing, rocker panel or defuser panel.

15. Method of producing an exterior trim part comprising at least the steps of forming and moulding a fibrous carrier in an exterior trim part and coating at least partially at least one surface using thermal polymer spray to splat molten droplets on the carrier surface forming a layer integrally bonded tot the carrier surface.

## Patentansprüche

1. Außenverkleidungsteil, umfassend mindestens eine poröse Faserschicht, die den Träger bildet, **dadurch gekennzeichnet, dass** mindestens eine Oberfläche aus einer Splat-Polymerbeschichtung besteht, die mindestens entlang eines Abschnitts der Oberfläche (2) des Trägers abgeschieden ist und eine Splat-Polymerbeschichtungslage-Schicht (7) bildet.

2. Außenverkleidungsteil nach Anspruch 1, wobei die Splat-Polymerbeschichtung (7) eine Shore-Härte bei Raumtemperatur unter Shore 50D, vorzugsweise eine Härte unter Shore 70A, aufweist.

3. Außenverkleidungsteil nach Anspruch 1 oder 2, wobei die Splat-Polymerbeschichtung (7) ein thermoplastisches Polymer oder eine Mischung von mindestens zwei thermoplastischen Polymeren mit vorzugsweise mindestens einem Polymer aus der Gruppe von Polyolefinen, wie Polyethylen mit niedriger Dichte (LDPE) oder Polypropylen (PP), Ethylen-Vinylacetat (EVA), Polyester (PES) oder Copolymer von Polyester (CoPEs), thermoplastischen Elastomeren (TPE), wie thermoplastischem Polyurethan (TPU) oder thermoplastischem Polyester-Elastomer (TPE-E) oder thermoplastischem Polyolefin (TPO), ist.

4. Außenverkleidungsteil nach Anspruch 3, wobei das Polymer weiter mindestens einen Zusatzstoff der Gruppen von Entflammungsverzögerern, Stabilisatoren, Antioxidantien, Farbmitteln oder -pigmenten, wie Ruß, Titandioxid, Calciumcarbonat, Calciumsulfat, Siliciumdioxid, Aluminiumoxid oder organischen Farbstoffmolekülen oder Polyphosphaten umfasst.

5. Außenverkleidungsteil nach einem der vorstehenden Ansprüche, wobei jedes Polymer der Splat-Beschichtung (7) einen Schmelzflussindex bei 190 °C über 20, vorzugsweise über 50, aufweist.

6. Außenverkleidungsteil nach einem der vorstehenden Ansprüche, wobei mindestens eine Splat-Polymerbeschichtungs-lage (18) luftdurchlässig ist, wobei vorzugsweise der Luftströmungswiderstand über der Trägerschicht, einschließlich der Splat-Beschichtungs-Lage oder -Lagen, zwischen 100 und 8000 N.s.m⁻³, vorzugsweise zwischen 1500 und 4000 N.s.m⁻³ liegt.

7. Außenverkleidungsteil nach einem der vorstehenden Ansprüche, wobei die Faserschicht Fasern und/oder Endlosfilamente und ein thermoplastisches Bindemittel umfasst.

8. Außenverkleidungsteil nach Anspruch 7, wobei die Fasern oder Endlosfilamente mindestens eines von Mineralfasern, vorzugsweise Glasfasern, thermoplastischen Fasern, vorzugsweise Polyester, wie Polyethylenterephthalat (PET) oder Polybutylenterephthalat (PBT), oder Naturfasern, wie Baumwolle, sind.

9. Außenverkleidungsteil nach Anspruch 7 oder 8, wobei das Bindemittel mindestens eines von einem Copolymer von Polyester, Polyolefin, wie Polypropylen oder Polyethylen, Polyamid ist.

10. Außenverkleidungsteil nach einem der Ansprüche 1 bis 6, wobei die Faserschicht aus Polyester-Zweikomponenten-Endlosfilamenten mit einem Kern/Mantel-Struktur besteht und wobei der Mantelmaterial ein Polyestercopolymer ist, dass das Bindemittel für die Faserschicht bildet.

11. Außenverkleidungsteil nach einem der vorstehenden Ansprüche, weiter umfassend mindestens eine zusätzliche Schicht auf der Oberfläche (2) des Trägers gegenüber der beschichteten Oberfläche, vorzugsweise aus einer Deckvlies, Folien- oder zusätzlichen geräuschdämpfenden Schicht, wie einen Schaum oder Filz.

12. Außenverkleidungsteil nach einem der vorstehenden Ansprüche, weiter umfassend eine Deckschicht, wie eine Vlies-, Gewebe- oder Maschenschicht, zwischen der faserigen Trägerschicht und der abgeschiedenen Splat-Beschichtungslage.

13. Außenverkleidungsteil nach einem der vorstehenden Ansprüche, wobei die Splat-Beschichtungslage ein Flächengewicht von zwischen 100 und 300 g.m⁻² aufweist.

14. Verwendung des Außenverkleidungsteils mit der Splat-Beschichtung nach einem der vorstehenden Ansprüche für ein Fahrzeug als eine Unterbodenplatte (13,14,15,16), eine Außenradhausschale, eine Abschirmung unter dem Motor, ein aerodynamisches Teil, eine Abdeckung oder Blende für den Motor oder das Getriebe, ein Türschweller oder eine Defuser-Platte.

15. Verfahren zum Herstellen eines Außenverkleidungsteils, umfassend mindestens die Schritte des Bildens eines faserigen Trägers und Herausformens eines Außenverkleidungsteils aus dem faserigen Träger und mindestens teilweisen Beschichtens mindestens einer Oberfläche (2) unter Verwendung von thermischem Polymerspritzen, um geschmolzene Tröpfchen auf die Trägeroberfläche zu spritzen, wodurch eine Splat -Schicht (7) gebildet wird, die integral an die Trägeroberfläche gebunden ist.

## Revendications

1. Pièce de garniture extérieure comprenant au moins une couche fibreuse poreuse formant le support, **caractérisée en ce qu'**au moins une surface se compose d'un revêtement de polymère éclaboussé déposé au moins le long d'une portion de la surface (2) du support formant une couche de revêtement de polymère de protection (7).

2. Pièce de garniture extérieure selon la revendication 1, moyennant quoi le revêtement de polymère de protection (7) présente une dureté shore à température ambiante inférieure à 50 shore D, de préférence une dureté inférieure à 70 shore A.

3. Pièce de garniture extérieure selon la revendication 1 ou 2, moyennant quoi le revêtement de polymère de protection (7) est un polymère thermoplastique, ou un mélange d'au moins deux polymères thermoplastiques, de préférence au moins un polymère du groupe des polyoléfines telles que du polyéthylène basse densité (LDPE) ou polypropylène (PP), éthylène-vinyle acétate (EVA), polyester (PES) ou copolymère de polyester (CoPes), élastomères thermoplastiques (TPE) tels que polyuréthane thermoplastique (TPU) ou élastomère de polyester thermoplastique (TPE-E) ou polyoléfine thermoplastique (TPO).

4. Pièce de garniture extérieure selon la revendication 3, moyennant quoi le polymère comprend en outre au moins un additif des groupes de retardateurs de flamme, stabilisateurs, antioxydants, agents colorés ou pigments, comme noir de carbone, dioxyde de titane, carbonate de calcium, sulfate de calcium, dioxyde de silicium, oxyde d'aluminium ou molécules colorantes organiques ou polyphosphates.

5. Pièce de garniture extérieure selon l'une des revendications précédentes, moyennant quoi chaque polymère du revêtement de protection (7) présente indice de fluidité à chaud à 190 °C au-dessus de 20, de préférence au-dessus de 50.

6. Pièce de garniture extérieure selon l'une des revendications précédentes, moyennant quoi au moins une couche de revêtement en polymère de protection (18) est perméable à l'air, de préférence la résistance au flux d'air sur la couche de support incluant la couche ou les couches de revêtement de protection est entre 100 et 8 000 N.s.m-3, de préférence entre 1 500 et 4 000 N.s.m-3.

7. Pièce de garniture extérieure selon l'une des revendications précédentes, moyennant quoi la couche fibreuse comprend des fibres et/ou des filaments sans fin et un liant thermoplastique.

8. Pièce de garniture extérieure selon la revendication 7, moyennant quoi les fibres ou filaments sans fin sont au moins une des fibres minérales, de préférence des fibres de verre, fibres thermoplastiques, de préférence du polyester, comme polytéréphtalate d'éthylène (PET) ou polytéréphtalate de butylène (PBT), ou des fibres naturelles comme du coton.

9. Pièce de garniture extérieure selon la revendication 7 ou 8, moyennant quoi le liant est au moins un copolymère de polyester, de polyoléfine, comme du polypropylène ou polyéthylène ou de polyamide.

10. Pièce de garniture extérieure selon l'une des revendications 1 à 6, moyennant quoi la couche fibreuse se compose de filaments bi-composant de polyester avec une structure cœur/gaine, et moyennant quoi le matériau de gaine est un copolymère de polyester formant le liant pour la couche fibreuse.

11. Pièce de garniture extérieure selon l'une des revendications précédentes, comprenant en outre au moins une couche supplémentaire sur la surface (2) du support opposé à la surface revêtue, de préférence une couche composée d'une mousseline, d'un film ou une couche absorbante de bruit supplémentaire comme une mousse ou un feutre.

12. Pièce de garniture extérieure selon l'une des revendications précédentes, comprenant en outre une couche de mousseline, comme une couche de non-tissé, tissé ou tricoté, entre la couche de support fibreuse et la couche de revêtement de protection déposée.

13. Pièce de garniture extérieure selon l'une des revendications précédentes, moyennant quoi la couche de revêtement de protection présente une masse surfacique entre 100 et 300 g.m-2.

14. Utilisation de la pièce de garniture extérieure avec le revêtement de protection selon l'une des revendications précédentes, pour un véhicule comme un écran sous caisse (13, 14, 15, 16), un revêtement de passage de roue, un écran moteur, un panneau aérodynamique, un revêtement ou panneau pour le moteur ou la boîte de vitesses, un bas de caisse ou un diffuseur arrière.

15. Procédé de production d'une pièce de garniture extérieure comprenant au moins les étapes de formation et de moulage d'un support fibreux dans une pièce de garniture extérieure et de revêtement au moins partiellement au moins d'une surface (2) en utilisant la vaporisation thermique pour éclabousser des gouttelettes de polymère fondu sur la surface du support afin de former une couche (7) intégralement collée à la surface du support.
